Europäisches Patentamt

European Patent Office

Office européen des brevets

(11) Publication number: 0 233 727
A2

# EUROPEAN PATENT APPLICATION

(21) Application number: 87300918.7

(22) Date of filing: 02.02.87

(51) Int. Cl.³: G 21 C 19/06
G 21 C 7/08

(30) Priority: 18.02.86 US 830776

(43) Date of publication of application:
26.08.87 Bulletin 87/35

(84) Designated Contracting States:
BE CH FR LI

(71) Applicant: THE BABCOCK & WILCOX COMPANY
1010 Common Street P.O. Box 60035
New Orleans Louisiana 70160(US)

(72) Inventor: Ales, Matthew Wayne
Route 2 Box 339V4
Amherst Virginia 24521(US)

(72) Inventor: Dixon, Larry Deon
233 Kirkley Circle
Forest Virginia 24551(US)

(72) Inventor: Brown, Steve Kelly
103 Westfield Drive
Lynchburg Virginia 24502(US)

(74) Representative: Purvis, William Michael Cameron et al,
D. Young & Co. 10 Staple Inn
London WC1V 7RD(GB)

(54) Control rod drive shaft guide.

(57) A control rod drive shaft guide (10) comprises an annular shaped body (12) to be inserted through a hole in a guide structure card (32) and having spring loaded arms (40) pivotally mounted in the body (12). The arms (40) snap outwardly to retain the guide in place. The guide has an exterior groove (18) to receive removal tooling, which tooling can engage release tabs (52) to cause retraction of the arms (40) to permit removal of the guide (10) from the card (32).

FIG. 2

EP 0 233 727 A2

1

# CONTROL ROD DRIVE SHAFT GUIDE

The invention relates to control rod drive shaft guides.

In nuclear reactors such as those made by Westinghouse, control rod drive shaft guides are provided, each comprising a monolithic ring centred by a through hole in a top card of a control rod guide structure. The guide is held in place by four bayonet-like devices which are attached to the card. Conical heads on the bayonet-like devices are pushed aside as the ring is installed and snapped over the edge of the ring to hold it down. In this design, the bayonet-like devices are highly stressed during operation due to differential thermal expansion and are prone to damage during the installation and removal of the ring. As a result of these various stresses, many of the bayonet-like devices in operating nuclear reactors become bent, cracked or broken.

Patent Specification US-A-4,326,921 entitled "Control Road Guide Thimble for Nuclear Reactor Fuel Assemblies" teaches improved control rod guide thimbles which include insets which project inwardly from the guide thimble to reduce control rod end vibrations during operation and thus reduce thimble wear.

Patent Specification US-A-4,030,975 entitled "Fuel Assembly for a Nuclear Reactor" teaches a threaded connection formed between the upper and/or lower alignment posts and the guide tubes which clamps the fuel assembly end plate therebetween.

Patent Specification US-A-4,313,796 entitled "Guide Post Modification for Nuclear Fuel Assembly" teaches an improved guide tube post which decreases the flow induced vibration of a cylindrical control rod suspended therethrough. The inner wall of the post, near where it exits into a diffuser region, is provided with a polygonal cross section.

Patent Specification US-A-4,208,248 entitled "Fuel Assembly With a Removable End Fitting" and US-A-4,321,111 entitled "Industrial Technique" teach a fuel assembly having a removable end fitting.

The above patents do not provide for elimination of highly stressed materials in the retention of the drive shaft guide and immunity to damage of the guide during installation or removal.

According to one aspect of the invention there is provided a control rod drive shaft guide comprising a main body portion having a central axial bore for receiving a control rod drive shaft and means for supporting the main body portion on a guide structure card; characterised by means for releasably locking the main body portion in position on the guide structure card.

According to another aspect of the invention there is provided a removable control rod drive shaft guide for a control rod guide structure card, comprising:

a substantially annular shaped main body portion having an axial bore for receiving a control rod drive shaft;

characterised by an upper exterior groove for receiving removal tooling;

a reduced outer diameter at the lower section of the main body portion defining a shoulder portion integral with the main body portion for supporting the main body portion on the guide structure card;

a substantially radial bore in the shoulder portion and a slot in the reduced outer diameter lower section in alignment with the radial bore;

a locking arm pivotally mounted in the bore, protruding into the slot and movable between a first, normal locking position for engaging the guide structure card and a second, release position;

means for urging the locking arm into the first, normal locking position; and means on the locking arm for moving the locking arm into the second, release position.

Thus the invention can provide a flexureless insert guide designed to replace a ring and bayonet arrangement while fulfilling the same guide functions as the original part. The guide is inserted through a hole in the control rod guide structure top card. Spring loaded arms snap outward beneath the card to retain the guide in place. The guide may be removed by removal tooling which attaches to the guide at a reduced diameter section near its upper end.

The drive shaft guide can be resistant to damage during installation or removal, relatively unstressed in operation and can fit easily into the apertures in a control rod guide structure card.

The invention is diagrammatically illustrated by way of example with reference to the accompanying drawings, in which:-

Figure 1 is a perspective view of a control rod drive shaft guide according to the invention; and

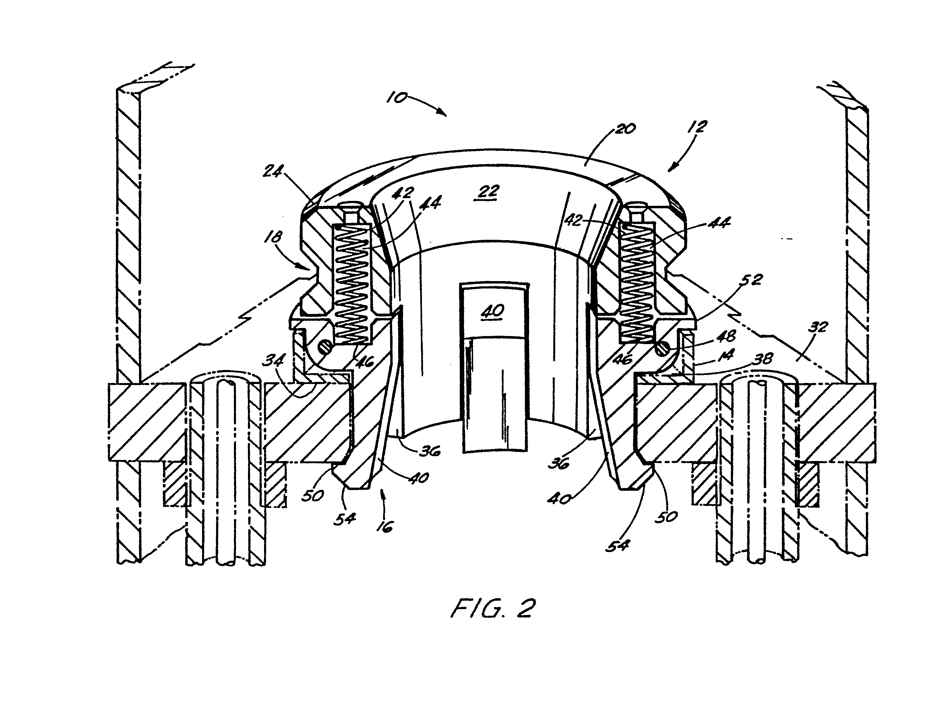

Figure 2 is a side sectional view of the guide of Figure 1 as it appears installed.

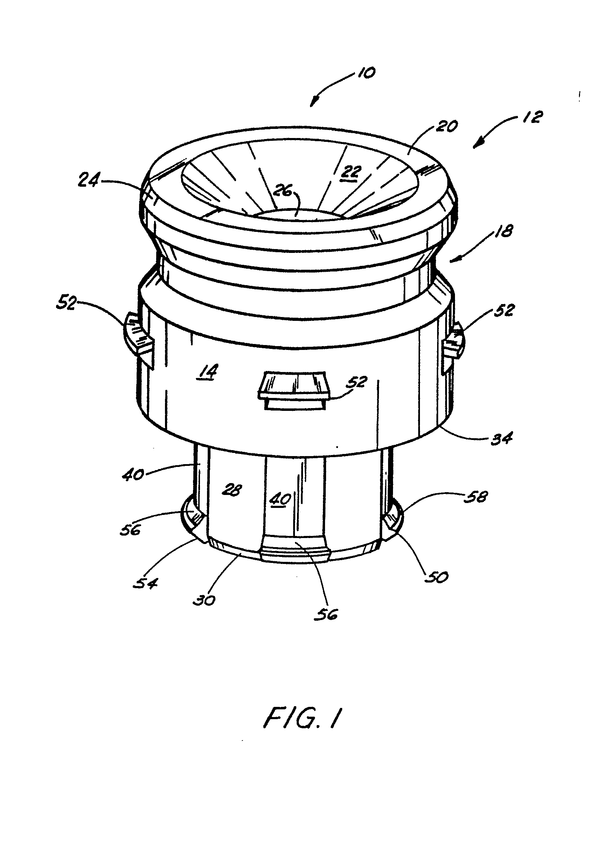

Referring to the drawings, a guide 10 is substantially annular in shape and comprises a main body portion 12, a shoulder portion 14, and locking means 16 for releasably locking the guide 10 in its installed position. In Figure 1, it can be seen that the main body portion 12 is of slightly smaller diameter near its upper end than the shoulder portion 14. The purpose of this is to permit use of removal tooling for removal and/or replacement of the guide 10.

The main body portion 12 is provided with means for receiving removal tooling such as a reduced outer diameter to form an exterior groove 18 around its circumference between a top surface 20 and the shoulder portion 14. The main body portion 12 is also provided at its upper end with a bevelled interior edge 22 and a first bevelled exterior edge 24. The bevelled interior edge 22 allows easier insertion of a control rod drive shaft into a central bore 26 through the main body portion 12 by serving as means for guiding the control rod drive shaft. The first exterior bevelled edge 24 acts in co-operative association with the exterior groove 18 to receive removal tooling by providing an edge with a natural tendency to centre the removal tooling over the guide 10 as it makes contact and guides the removal tooling towards the groove 18 for attachment to the main body portion 12.

The main body portion 12 has a reduced outer diameter at a lower end 28 below the shoulder portion 14 and is provided with a second exterior bevelled edge 30. The bevelled edge 30 serves to help guide the lower end 28 into an aperture in a card 32 of a control rod drive structure. The shoulder portion 14 has an outer diameter slightly larger than the upper section of the main body portion 12 and has a substantially flat bottom edge 34 to serve as a means of support for the main body portion 12 on the card 32.

The lower end 28 is provided with a plurality of slots 36 spaced around the circumference in communication with substantially radial bores 38 in the shoulder portion 14. The slots 36 and the radial bores 38 receive the locking means 16 therein.

The locking means 16 comprise locking arms 40 and coil springs 42. The coil springs 42 are received in axial bores 44 and bear against an indented or notched upper surface 46 of the locking arms 40 to urge the locking arms 40 into a first, normal locking position. The locking arms 40 are pivotally mounted in the radial bores 38 by means of pins 48 and provided with lower locking tabs 50 and means for moving the locking arms 40 into a second, release position such as upper release tabs 52. Figure 1 shows that the lower locking tabs 50 are provided with an exterior bevelled edge 54 and an interior bevelled edge 56. Each exterior bevelled edge 54 serves to prevent the respective tab 50 from catching or hanging up on the card 32 and also to pivot the locking arm 40 toward the second, release position when the guide 10 is being inserted.

The radial force of the interior bevelled edge 56 against the bottom corner of the card 32 is provided by the pressure of the spring 42 on the locking arm 40 and serves as the primary force which retains the guide 10 in place under the hydraulic loads normally encountered in nuclear reactors. A lip 58 on each of the arms 40 prevents the removal of the guide 10 without first disengaging the arms 40 by means of removal tooling. To achieve release and removal of the guide 10, removal tooling not shown is attached to the guide 10 by means of the exterior groove 18 and caused to depress the tabs 52, thereby moving the arms 40 into their second, release position wherein the lower locking tabs 50 are disengaged from the lower side of the card 32. The removal tooling and the guide 10 are then removed.

## CLAIMS

1. A control rod drive shaft guide (10) comprising a main body portion (12) having a central axial bore (26) for receiving a control rod drive shaft and means (34) for supporting the main body portion (12) on a guide structure card (32);

characterised by means (40) for releasably locking the main body portion (12) in position on the guide structure card (32).

2. A control rod drive shaft guide according to claim 1, further comprising means (18) for receiving removal tooling on the main body portion (12).

3. A control rod drive shaft guide according to claim 2, wherein the means for receiving removal tooling comprises an exterior groove (18) in the main body portion (12).

4. A control rod drive shaft guide according to any one of claims 1 to 3, wherein the main body portion (12) is substantially annular shaped.

5. A control rod drive shaft guide according to any one of claims 1 to 4, wherein the supporting means comprises a shoulder (34) integrally formed on the main body portion (12) at substantially its midsection.

6. A control rod drive shaft guide according to any one of claims 1 to 5, wherein the locking means comprises:

a substantially radial bore (38) substantially at the midsection of the main body portion (12) and a lower slot (36) aligned with and in communication with the bore (38);

a locking arm (40) pivotally mounted in the bore (38), protruding into the slot (36) and movable between a first, normal locking position for engaging the guide structure card (32) and a second, release position;

means (44) for urging the locking arm (40) into the first, normal locking position; and means (52) on the locking arm (40) for moving the locking arm (40) into the second, release position.

7. A control rod drive shaft guide according to claim 6, wherein the means for urging the locking arm (40) into the first, normal locking position comprises a spring (42) biased against the locking arm and received within a bore (44) in the main body portion (12).

8. A control rod drive shaft guide according to claim 6, wherein the means for urging the locking arm (40) into the second, release position comprises a release tab (52).

9. A removable control rod drive shaft guide for a control rod guide structure card, comprising:

a substantially annular shaped main body portion (12) having an axial bore for receiving a control rod drive shaft;

characterised by an upper exterior groove (18) for receiving removal tooling;

a reduced outer diameter at the lower section of the main body portion (12) defining a shoulder portion (14) integral with the main body portion (12) for supporting the main body portion (12) on the guide structure card (32);

a substantially radial bore in the shoulder portion (14) and a slot (36) in the reduced outer diameter lower section (28) in alignment with the radial bore (38);

a locking arm (40) pivotally mounted in the bore (38), protruding into the slot (36) and movable between a first, normal locking position for engaging the guide structure card (32) and a second, release position;

means (40) for urging the locking arm (40) into the first, normal locking position; and means (52) on the locking arm (40) for moving the locking arm into the second, release position.

10. A removable control rod drive shaft guide according to claim 9, wherein the means for urging the locking arm into the first, normal locking position comprises a spring (42) biased against the locking arm (40) and received within a bore (44) in the main body portion.

**0233727**

11. A removable control rod drive shaft guide according to claim 9, wherein the means for moving the locking arm (40) into the second release position comprises a release tab (52).

FIG. 1

FIG. 2